# EUROPEAN PATENT SPECIFICATION

(11) **EP 2 361 146 B1**
(45) Date of publication and mention of the grant of the patent: **28.11.2012**
(21) Application number: 09783493.1
(22) Date of filing: 28.09.2009
(51) Int. Cl.: B01J 2/02, B01J 2/18

(54) **VIBRATING PRILLING BUCKET FOR GRANULATION OF A FLUID SUBSTANCE**
VIBRIERENDER PRILLEIMER ZUM GRANULIEREN EINER FLUIDEN SUBSTANZ
GODET DE GRELONAGE VIBRANT POUR LA GRANULATION D'UNE SUBSTANCE FLUIDE

(30) Priority: 05.11.2008 EP 08019343
(43) Date of publication of application: 31.08.2011
(73) Proprietor: Urea Casale S.A., 6900 Lugano-Besso (CH); Tuttle Prilling Systems, Evergreen, CO 80439 (US)
(72) Inventor: RIZZI, Enrico, I-22070 Casnate con Bernate (CO) (IT); SNYDER, Donald Malcolm, Evergreen Colorado 80439 (US); MONTINI, Fabiano, CH-6807 Taverne (CH)
(74) Representative: Zardi, Marco
(86) International application number: PCT/EP2009/062536
(87) International publication number: WO 2010/052069

(56) References cited:
- EP-A- 0 233 384
- EP-A- 1 477 219
- US-A- 4 585 167

## Description

### Field of the invention

The invention relates to a prilling bucket for the granulation of a fluid substance.

### Prior Art

Prilling buckets are used for the conversion of a solidifiable liquid product into solid granules. The prilling bucket is substantially a rotating bucket with a perforated side wall, mounted on top of a prilling tower, to generate a flow of liquid droplets inside the tower itself. The droplets are solidified in countercurrent with a cooling medium, e.g. air, obtaining the solid granules at the bottom of the tower. Prilling towers are commonly used at the end stage of urea plants.

It has been found that an axial vibration of the prilling bucket helps to break the liquid jets exiting the perforated side wall, and improves mono-dispersion of the liquid droplets, that is their uniformity in size and shape. The vibration is usually imparted by a pneumatic vibrator, as electric vibrators are found unsuitable for this specific application. A prilling bucket is known from US 4,585,167 and an improved rotating and vibrating prilling bucket is disclosed in WO 2004/101131.

The main challenges in the realization of a rotating and vibrating prilling bucket are: the relevant mechanical stress, especially in large plants where the bucket has a considerable diameter and mass, and needs to be rotated at a high speed (200-300 rpm) and vibrated at a relatively high frequency, in order to spread the liquid droplets over the entire cross section of the tower; the installation in a usually aggressive environment, namely the inside of the prilling tower; the need to provide appropriate feeding and discharge means for the pressurized air, e.g. through the rotating shaft, which however makes the design more complex and expensive.

It should also be noted that a prilling bucket is usually found at the end of a compiex chemical plant, and reliability is crucial, as failure of the bucket would stop the production of the whole plant. In the field of urea, for example, a loss from the prilling bucket would spread liquid urea into the tower, and the urea would solidify over the solid granules collected at the bottom of the tower itself; the granules would be lost and a prolonged stop would be necessary to remove the solidified urea and bring the tower again to operation.

Despite the fact that the prilling bucket disclosed in WO 2004/101131 can address these problems in a satisfactory manner, there is still the need to improve this prior art, especially under the incentive to realize larger and faster-rotating prilling buckets for large-scale plants.

### Summary of the invention

The technical problem underlying the present invention is to provide a structure of a prilling bucket adapted to overcome the above drawbacks and in particular: to protect the moving parts of the prilling bucket from the environment of the prilling tower, especially from dust; to prevent the loss of liquid from the bucket into the prilling tower; to improve the reliability. An aim of the invention is also to simplify the bucket and reduce its costs.

Hence, the invention discloses a vibrating prilling bucket for granulation of a fluid substance, said bucket comprising: a hub; an upper plate, a lower plate and a perforated side wall, defining a fluid chamber for the fluid; a pneumatic vibrating engine connected to vibrating parts of said bucket, and at least a pressurized air inlet for operating said vibrating engine, the bucket being characterized in that it comprises a bottom casing defining a bottom sealed chamber separated from the fluid chamber.

Said bottom casing can comprise a bottom cover or a dead flange, fixed to the lower part of the bucket. Preferably, said bottom cover or flange has substantially the same diameter of the bottom of the prilling bucket.

According to one aspect of the invention, the sealed chamber is in communication with the pressurized air inlet, thus being maintained under pressure while the prilling bucket is in use, with further advantages that will be explained hereinbelow.

The pneumatic vibrating engine is preferably mounted inside the bottom sealed chamber and, more preferably, the sealed chamber provides directly the required air feed to the engine. Hence, the air inlet(s) of the vibrating engine are open in the bottom sealed chamber, so that the pressurized sealed chamber, while the bucket is in operation, feeds the vibrating engine with pressurized air. According to a preferred embodiment, the air output of the vibrating engine is connected via at least one air discharge duct to at least one one-way air-discharge valve mounted on the cover of the bottom sealed chamber. In one embodiment of the invention, the vibrating engine is fixed directly to said bottom cover.

According to another aspect of the invention, the air feed is delivered into the bottom sealed chamber by means of an axial passage through the hub of the bucket. In a preferred embodiment, a hollow tube shaft is used to power the rotation and to provide the pressurized air feed.

In a preferred embodiment of the invention, the hub of the prilling bucket comprises a first element coupled to the rotating shaft, and fixed relative to the vibration, and a second element coaxial and sliding into said first element, this second element being coupled to the vibrating engine and to the vibrating parts of the bucket, and leaving the axial passage for the pressurized air feed through the hub of the bucket.

Further and preferred aspects of the invention are the following. To reduce the vibrating mass, the vibrating engine is coupled to the perforated side wall of the bucket, and said perforated side wall is connected to the frame of the bucket with a flexible connection, filtering the vibration-driving force. As a consequence, the vibrating equipment of the bucket comprises substantially the perforated side wall and other parts (e.g. screws) with negligible mass, while other massive parts such as the top and bottom flanges, and the fluid contained in the bucket, are mechanically isolated from the vibration.

Still with the aim to reduce the mechanical stress, in a preferred embodiment of the invention, the vibrating engine is balanced, comprising two identical and counter-rotating rotary units.

Still another aspect of the invention is the optional provision of at least a vibration sensor. A vibration sensor can be useful to monitor the operation of the bucket and detect failures of the vibrating system, without the need of a physical inspection. As an example, the vibration sensor comprises a fixed proximity sensor facing a vibrating element; the data from said sensor are then used for spectral analysis, and compared with standard values in order to detect a possible failure or damage.

A first advantage of the invention is that the bottom sealed chamber prevents a liquid loss from the bucket into the prilling tower and protects the internals of the bucket from dust and, more generally, from the environment of the prilling tower. This is a significant advantage especially when the environment of the tower is aggressive, as the case of urea, and because the prilling bucket comprises moving parts due to the rotation and vibration. Being protected in a bottom sealed casing, the materials of the moving parts can be chosen with more freedom, e.g. the steel for the return springs of the vibrating system can be chosen on the basis of the best elasticity and fatigue resistance.

Another advantage is the simple and effective pressurized air feed. Using the bottom sealed chamber to feed directly the vibrators, and using a tube shaft for providing the pressurized air to the sealed chamber, is much less expensive than drilling air-feeding channels into a conventional shaft and other parts of the bucket. Moreover, the air course to the vibrators is straight and with higher cross section, hence pressure drops in the air circuit are reduced.

The elastic connection between the perforated side wall and the frame of the bucket, in a preferred embodiment of the invention, reduces the mass of the vibrated parts and, hence, the mechanical stress. The bucket with reduced vibrating mass can more reliably run at higher frequencies, and a higher frequency means a better mono-dispersion of droplets, giving advantages also from the point of view of the process, i.e. a more valuable product. It has been found that the optimum frequency is in relation with the rotational speed, then the inventive bucket can also rotate at a greater speed and is suitable for use in large plants, where a single and faster bucket is preferred to a plurality of smaller buckets. Stress is further reduced, in a preferred embodiment, by the balanced vibrating engine.

The hub assembly including the coaxial fixed and sliding elements and the return springs gives a precise guide to the vibrating parts, as the guide is obtained on the relatively large diameter of the hub. The guide on a self-lubricating sleeve avoids the need of O-rings between parts in relative movements.

An object of the invention is also a granulation apparatus with a prilling tower equipped with at least one prilling bucket as above. Two or more prilling buckets, running in parallel, can be used in large or very large capacity plants. Further features and the advantages will become clearer from the following description of an indicative and non-limiting example of embodiments thereof, made with reference to the attached drawings.

### Brief description of the figures

Fig. 1 shows a simplified scheme of a prilling tower equipped with a prilling bucket according to the invention.
Fig. 2 is a schematic cross section of a prilling bucket according to a first preferred embodiment of the invention.
Fig. 3 is a schematic cross section of a prilling bucket according to a second preferred embodiment of the invention.

### Detailed description of the invention

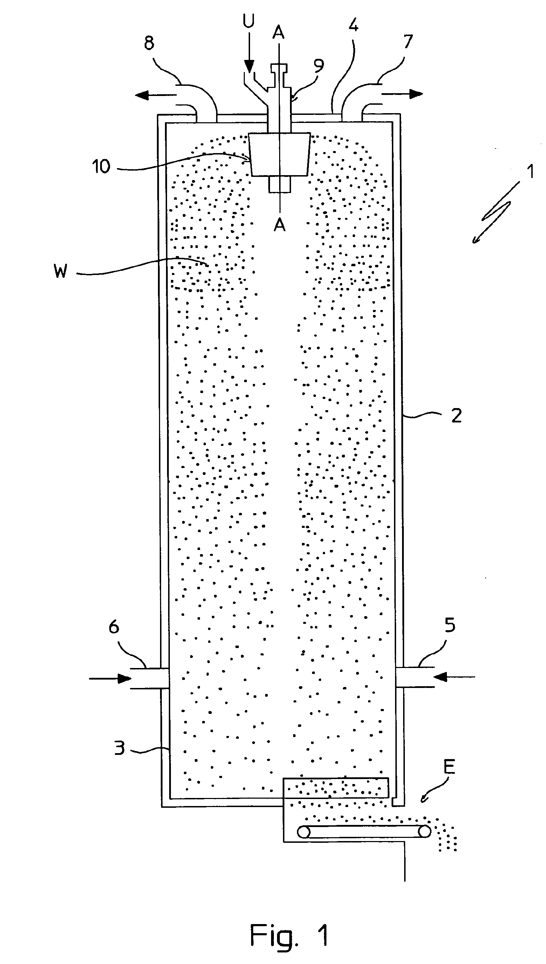

With reference to Fig. 1, a prilling tower 1 for the granulation of urea has a cylindrical shell 2 with a vertical axis A-A closed by a base plate 3 and a top wall 4. Ducts 5 and 6 are provided near base plate 3, for input of a continuous rising flow of a cooling medium (for example air) through tower 1. Ducts 7 and 8 are provided at the top wall 4 for discharging said cooling medium.

Liquid urea U is fed to a prilling bucket 10 installed at top of the tower 1. In operation, the prilling bucket 10 is rotated around axis A-A and vibrated according to the same axis A-A, producing a downward flow W of urea droplets, which are cooled by the rising cooling air until they solidify into spherical granules. The granules are discharged through a bottom aperture E.

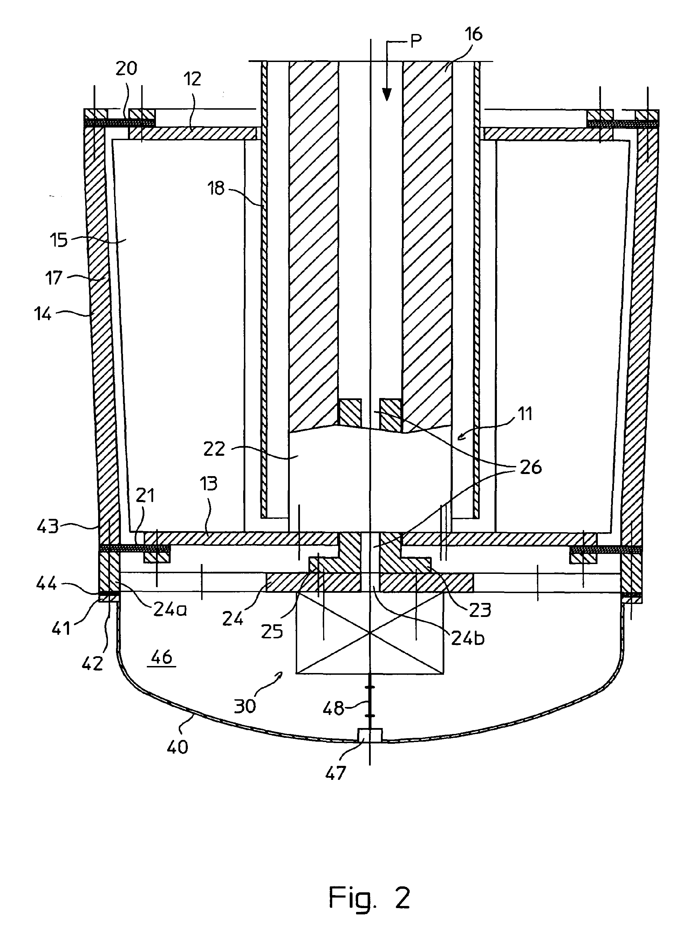

The bucket 10 (Fig. 2) has a frusto-conical body comprising basically: a hub 11; a top flange 12, a bottom flange 13 and a perforated side wall 14. The flanges 12 and 13 are connected by impeller plates 15. The hub 11 is connected to a rotating shaft 16, powered by a suitable motor (not shown). In the example the shaft 16 is realized in a simple manner with a pipe, preferably of a standard size to reduce costs.

The urea U, in use, is fed into a liquid chamber 17, between the top and bottom flanges 12 and 13, through the annular space around the shaft 16, and through a perforated feeding pipe 13.

The bucket 10 is also vibrated, in use, according to direction A-A, by a pneumatic vibration engine 30 installed at the bottom of the bucket, inside a bottom sealed chamber 46 delimited by a bottom casing or cover 40. The pressurized air P for said engine 30 is delivered by the shaft 16, acting also as air pipe.

The perforated side wall 14 is connected to the flanges 12 and 13 by elastic rings 20 and 21, for example rubber rings. The rings 20 and 21 are substantially rigid in the torsional direction, thus being able to transmit a driving torque in the rotational sense, but flexible in the axial direction A-A. Hence, it can be stated that the wall 14 is elastically suspended, rather than fixed, to the frame of the bucket 10, said frame being formed, in the example, by the flanges 12, 13 and the plates 15. A flexible connection in accordance with the invention may also be obtained with means equivalent to the rings 20 and 21, such as expansion joints.

The hub 11 includes an extension 22, secured to one end of the tube shaft 16, and at least a moving sleeve 23 fixed to the vibrating equipment of the bucket 10. In a preferred embodiment, said moving sleeve 23 is sliding coaxially inside a fixed sleeve, with a suitable guide bearing made of a self-lubricating material.

The moving sleeve 23 is fixed to a plate 24 below the lower flange 13, and said plate 24 supports the vibrating engine 30 and is fixed to the perforated wall 14 of the bucket.

Referring more in particular to the design of Fig. 2, a bottom flange of said moving sleeve 23 is firmly connected to the plate 24 below the lower flange 13, by means of screws 25, and the base of the extension 22 is fixed, e.g. screwed, to the lower flange 13. The alternate movement of the sleeve 23 relative to the hub 11 is opposed by suitable elastic return means, such as one or more springs housed inside the hub 11. It should be noted that the terms of fixed and moving sleeve are in relation to the vibration in the A-A direction, as the whole assembly, in use, rotates around A-A, powered by the shaft 16.

The plate 24 is part of the vibrating equipment, and to reduce weight it is structured with a peripheral ring portion 24a fixed to the wall 14, and a central portion, with a hole 24b below the hub 11. The hub 11 has a passing-through hole 26 with an upper end in communication with the interior of said tube shaft 16, and a lower end above the hole 24b of the plate 24. Further details of the hub 11 are not explained as they can be easily determined by a person skilled in the art.

The vibrating engine 30 is not described in greater detail, as it can be realized with commercially available items.

The cover 40 is fixed to the bottom of the bucket 10, housing the vibrating engine 30. In the embodiment of the drawings, the cover 40 has a flange 41 with the same diameter of the lower part of the bucket 10, fixed by screws 42 to the ring portion 24a of the plate 24 and to the perforated wall 14. The screws 42 also secure the elastic ring 21 to the lower part 43 of the wall 14. A gasket 44 is interposed between the flange 24a of the plate 24 and the flange 41 of the cover 40. It can be noted that the plate 24 is a rigid connection between the engine 30 and the perforated wall 14, transmitting the vibrating forces.

The chamber 46 inside the cover 40 is sealed from outside by the gasket 44, and is separated from the liquid chamber 17 by means of the lower flange 13 and the annular ring 21. The chamber 46 is however in communication with the inside of the tube shaft 16, via the axial passage 26 through the hub 11, and the hole 24b of the plate 24, thus receiving the air feed P. The air inlet of the engine 30 is open in the chamber 46, while the air outlet is connected to a one-way air discharge valve 47 on the cover 40, via a flexible air duct 48.

Optionally, a lubricating oil mist may be provided in the pressurized chamber 46. This feature is advantageous especially if the engine 30 comprises counter-rotating vibrators with a gear connection.

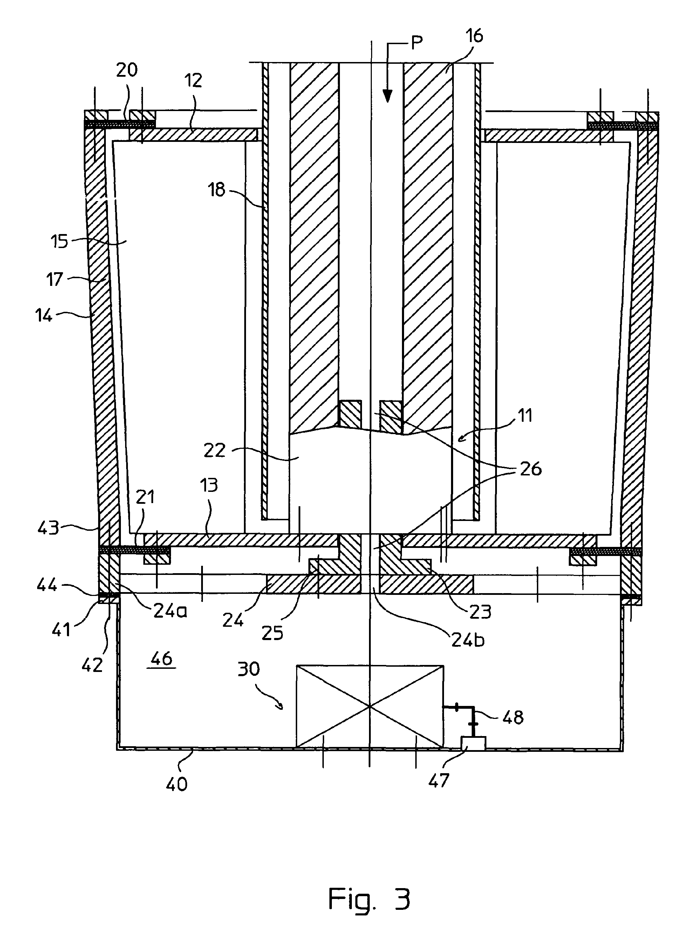

In a second embodiment of the invention, as in Fig. 3, the engine 30 is fixed directly to the cover 40. To this purpose, the cover 40 has preferably a bottom plane surface and is realized with a suitable thickness.

In a further and simplified embodiment (not shown) the engine 30 is fixed directly to said cover 40 and the plate 24, sleeve 23 and internal return springs of the hub 11 are eliminated, the return action being given by the elasticity of the rings 20, 21. The advantage if this embodiment is the great simplification of the hub 11 and vibrating mass reduction. Moreover, the engine 30 is easily removed together with the cover 40 for maintenance or replacement, if necessary.

Operation is as follows. The shaft 16 rotates the hub 11 and the whole bucket 10 at a given speed, in some cases up to 200-300 rpm or more. Torque is transmitted to the cover 22 of the hub 11 and then to the bottom flange 13; rotation of the flange 13, by means of the ring 21, drives the other parts of the bucket, including the perforated wall 14, the upper flange 12, the plate 24 and the cover 40.

While rotating, the wall 14 is also vibrated in direction A-A by the engine 30. The vibration is transmitted directly to the wall 14 by the plate 24 screwed to the wall part 43, being however filtered by the elastic rings 20 and 21. Hence, the vibrating equipment comprises the sleeve 23, the plate 24, the perforated wall 14 and the casing 40, but the massive flanges 12 and 13 and their connecting impeller plates 15, as well as the major part of the liquid contained in the bucket 10 between the flanges 12 and 13, are maintained substantially free from any vibration.

Air P is fed through the tube shaft 16 and the passing-through passage 26 of the hub 11, keeping the chamber 46 under pressure, so that the engine 30 receives the pressurized air feed directly form the chamber 46. Air is then discharged outside the cover 40 via the one-way valve 47.

The liquid substance U to be granulated, for example purified urea produced in a suitable plant, is fed into the prilling bucket 10, and ejected through the perforated wall 14, due to centrifugal force. The vibration of side wall 14 helps the breaking up of the liquid jets into a stream of uniform droplets.

The advantages of the invention are made more evident by the above detailed description. Referring to Fig. 2, it should be noted that the moving parts of bucket 10, especially the vibrating parts (including sleeve 23, plate 24, springs inside the hub 11), are sealed and safely protected from both the aggressive liquid urea and from dust that may be present in the tower 1. The entry of dust from the bottom, in particular is prevented from the pressure inside casing 40.

A loss of liquid urea due e.g. to failure of ring 21, would be contained in the sealed chamber 46, rather than dispersed into the tower 1. This would require to stop and replace or repair the bucket, but would avoid the more serious damage of a liquid loss into the prilling tower 1 and on the granules at the bottom region 3 of the tower.

## Claims

1. A vibrating prilling bucket (10) for granulation of a fluid substance (U), said bucket comprising: a hub (11); an upper plate (12), a lower plate (13) and a perforated side wall (14), defining a fluid chamber (17) for the fluid (U); a pneumatic vibrating engine (30) connected to vibrating parts (14) of said bucket, and at least a pressurized air inlet (P) for operating said vibrating engine (30), the bucket being **characterized in that** it comprises a bottom casing (40) defining a bottom sealed chamber (46) separated from the fluid chamber (17).

2. A prilling bucket according to claim 1, **characterized in that** the bottom sealed chamber (46) is in communication with said pressurized air inlet of the bucket (10), in such a way that the bottom chamber is pressurized while the bucket is in operation.

3. A prilling bucket according to claim 1 or 2, **characterized in that** said vibrating engine (30) is installed inside said bottom sealed chamber (46).

4. A prilling bucket according to claim 3, **characterized in that** the air inlet of said vibrating engine (30) is open in said chamber (46), in such a way that in operation the vibrating engine receives the pressurized air feed from the sealed chamber.

5. A prilling bucket according to claim 3 or 4, wherein the vibrating engine (30) is connected to at least one one-way air-discharge valve (47).

6. A prilling bucket according to any of claims 2 to 5, wherein the hub (11) has an axial passage (26) having an upper end connected to said pressurized air feed, and a lower end in fluid communication with said sealed chamber (46), said passage (26) of the hub (11) providing pressurization of the sealed chamber (46).

7. A prilling bucket according to claim 6, wherein the hub (11) is connected to a tube shaft (16) for rotation around the axis (A-A), and said tube shaft provides the pressurized air feed (P) to the sealed chamber (46) through said axial passage (26) of the hub (11).

8. A prilling bucket according to claim 6 or 7, wherein the hub (11) comprises: a first element (22) coupled to the rotating shaft (16), and fixed in relation to the vibrating movement, a second element (23) coaxial and slidable into said first element, said second element (23) being coupled to the vibrating engine (30) and associated to the vibrating parts (14) of the bucket; said second element (23) defining said central axial passage (26) of the hub (11) for the pressurized air feed (P).

9. A prilling bucket according to any one of the preceding claims, wherein the vibrating engine (30) is directly fixed to a bottom cover (40) of the bucket, defining said sealed chamber (46).

10. A prilling bucket according to any of claims 1 to 9, further comprising at least a vibration sensor.

11. A prilling bucket according to any one of the preceding claims, wherein the vibrating engine (30) is connected to said perforated side wall (14), and a flexible connection (20, 21) is provided between the side wall (14) and the frame (12, 13) of the bucket, said flexible connection being adapted to act as a mechanical filter for the driving force delivered by said vibrating engine (30).

12. An apparatus (1) for the granulation of a fluid substance, **characterized in that** it comprises at least a prilling bucket (10) according to any one of the preceding claims.

## Patentansprüche

1. Vibrierender Sprühkristallisationsbehälter (10) zur Granulierung einer Fluidsubstanz (U), wobei der Behälter umfasst: eine Nabe (11); eine obere Platte (12), eine untere Platte (13) und eine perforierte Seitenwand (14), die eine Fluidkammer (17) für das Fluid (U) bilden; einen pneumatischen Vibrationsmotor (30), der mit Vibrationsteilen (14) des Behälters verbunden ist, und mindestens einen Drucklufteinlass (P) zum Betreiben des Vibrationsmotors (30), wobei der Behälter **dadurch gekennzeichnet ist, dass** er ein unteres Gehäuse (40) aufweist, das eine untere abgedichtete Kammer (46) bildet, die von der Fluidkammer (17) getrennt ist.

2. Sprühkristallisationsbehälter nach Anspruch 1, **dadurch gekennzeichnet, dass** die untere abgedichtete Kammer (46) in Verbindung mit dem Drucklufteinlass des Behälters (10) steht, derart, dass die untere Kammer druckbeaufschlagt ist, während der Behälter in Betrieb ist.

3. Sprühkristallisationsbehälter nach Anspruch 1 oder 2, **dadurch gekennzeichnet, dass** der Vibrationsmotor (30) im Inneren der unteren abgedichteten Kammer (46) angebracht ist.

4. Sprühkristallisationsbehälter nach Anspruch 3, **dadurch gekennzeichnet, dass** der Lufteinlass des Vibrationsmotors (30) in die Kammer (46) mündet, derart, dass der Vibrationsmotor im Betrieb die Druckluftzufuhr von der abgedichteten Kammer erhält.

5. Sprühkristallisationsbehälter nach Anspruch 3 oder 4, **dadurch gekennzeichnet, dass** der Vibrationsmotor (30) an mindestens ein Einweg-Luftablassventil (47) angeschlossen ist.

6. Sprühkristallisationsbehälter nach einem der Ansprüche 2 bis 5, wobei die Nabe (11) einen axialen Durchgang (26) aufweist, der ein oberes Ende hat, das mit der Druckluftzufuhr verbunden ist, und ein unteres Ende, das in Fluidverbindung mit der abgedichteten Kammer (46) steht, wobei der Durchgang (26) der Nabe (11) für die Druckbeaufschlagung der abgedichteten Kammer (46) sorgt.

7. Sprühkristallisationsbehälter nach Anspruch 6, wobei die Nabe (11) mit einem Rohrschaft (16) zur Drehung um die Achse (A-A) verbunden ist, und der Rohrschaft durch den axialen Durchgang (26) der Nabe (11) hindurch für die Druckluftzufuhr (P) in die abgedichtete Kammer (46) sorgt.

8. Sprühkristallisationsbehälter nach Anspruch 6 oder 7, wobei die Nabe (11) umfasst: ein erstes Element (22), das an die Drehwelle (16) angeschlossen und in Bezug auf die Vibrationsbewegung feststehend ist, ein zweites Element (23), das koaxial zum und gleitfähig im ersten Element vorgesehen ist, wobei das zweite Element (23) an den Vibrationsmotor (30) angeschlossen und den Vibrationsteilen (14) des Behälters zugeordnet ist; wobei das zweite Element (23) den zentralen axialen Durchgang (26) der Nabe (11) für die Druckluftzufuhr (P) bildet.

9. Sprühkristallisationsbehälter nach einem der vorhergehenden Ansprüche, wobei der Vibrationsmotor (30) direkt an einem unteren Deckel (40) des Behälters befestigt ist, der die abgedichtete Kammer (46) bildet.

10. Sprühkristallisationsbehälter nach einem der Ansprüche 1 bis 9, darüber hinaus mindestens einen Vibrationssensor umfassend.

11. Sprühkristallisationsbehälter nach einem der vorhergehenden Ansprüche, wobei der Vibrationsmotor (30) mit der perforierten Seitenwand (14) verbunden ist und eine flexible Verbindung (20, 21) zwischen der Seitenwand (14) und dem Grundgestell (12, 13) des Behälters vorgesehen ist, wobei die flexible Verbindung dazu angepasst ist, als mechanischer Filter für die vom Vibrationsmotor (30) gelieferte Antriebskraft zu wirken.

12. Vorrichtung (1) zur Granulierung einer Fluidsubstanz, **dadurch gekennzeichnet, dass** sie mindestens einen Sprühkristallisationsbehälter (10) nach einem der vorhergehenden Ansprüche, umfasst.

## Revendications

1. Godet de granulation vibrant (10) pour la granulation d'une substance fluide (U), ledit godet comprenant : un moyeu (11), une plaque supérieure (12), une plaque inférieure (13) et une paroi latérale perforée (14), définissant une chambre de fluide (17) pour le fluide (U), un moteur pneumatique vibrant (30) relié à des parties vibrantes (14) dudit godet, et au moins une entrée d'air mis sous pression (P) pour actionner ledit moteur vibrant (30), le godet étant **caractérisé en ce qu'**il comprend un carter inférieur (40) définissant une chambre hermétique inférieure (46) séparée de la chambre de fluide (17).

2. Godet de granulation selon la revendication 1, **caractérisé en ce que** la chambre hermétique inférieure (46) est en communication avec ladite entrée d'air mis sous pression du godet (10), de manière à ce que la chambre inférieure soit mise sous pression pendant que le godet fonctionne.

3. Godet de granulation selon la revendication 1 ou 2, **caractérisé en ce que** ledit moteur vibrant (30) est installé à l'intérieur de ladite chambre hermétique inférieure (46).

4. Godet de granulation selon la revendication 3, **caractérisé en ce que** l'entrée d'air dudit moteur vibrant (30) est ouverte dans ladite chambre (46), de manière à ce que, en fonctionnement, le moteur vibrant reçoive l'alimentation en air mis sous pression provenant de la chambre hermétique.

5. Godet de granulation selon la revendication 3 ou 4, dans lequel le moteur vibrant (30) est relié à au moins un clapet antiretour d'évacuation d'air (47).

6. Godet de granulation selon l'une quelconque des revendications 2 à 5, dans lequel le moyeu (11) a un passage axial (26) ayant une extrémité supérieure reliée à ladite alimentation en air mis sous pression, et une extrémité inférieure en communication fluidique avec ladite chambre hermétique (46), ledit passage (26) du moyeu (11) assurant une mise sous pression de la chambre hermétique (46).

7. Godet de granulation selon la revendication 6, dans lequel le moyeu (11) est relié à un arbre tubulaire (16) pour une rotation autour de l'axe (A-A), et ledit arbre tubulaire assure l'alimentation en air mis sous pression (P) de la chambre hermétique (46) par l'intermédiaire dudit passage axial (26) du moyeu (11).

8. Godet de granulation selon la revendication 6 ou 7, dans lequel le moyeu (11) comprend : un premier élément (22) couplé à l'arbre rotatif (16), et fixe par rapport au mouvement vibrant, un second élément (23) coaxial et pouvant coulisser dans ledit premier élément, ledit second élément (23) étant couplé au moteur vibrant (30) et associé aux parties vibrantes (14) du godet, ledit second élément (23) définissant ledit passage axial central (26) du moyeu (11) pour l'alimentation en air mis sous pression (P).

9. Godet de granulation selon l'une quelconque des revendications précédentes, dans lequel le moteur vibrant (30) est directement fixé à un capot inférieur (40) du godet, définissant ladite chambre hermétique (46).

10. Godet de granulation selon l'une quelconque des revendications 1 à 9, comprenant en outre au moins un capteur de vibration.

11. Godet de granulation selon l'une quelconque des revendications précédentes, dans lequel le moteur vibrant (30) est relié à ladite paroi latérale perforée (14), et un raccord souple (20, 21) est agencé entre la paroi latérale (14) et le châssis (12, 13) du godet, ledit raccord souple étant adapté pour agir comme un filtre mécanique pour la force d'entraînement délivrée par ledit moteur vibrant (30).

12. Dispositif (1) pour la granulation d'une substance fluide, **caractérisé en ce qu'**il comprend au moins un godet de granulation (10) selon l'une quelconque des revendications précédentes.
